# EUROPÄISCHE PATENTANMELDUNG

(11) **EP 2 180 179 A2**
(43) Veröffentlichungstag der Anmeldung: **28.04.2010**
(21) Anmeldenummer: 09168994.3
(22) Anmeldetag: 31.08.2009
(51) Int. Cl.: F02P 19/02, F02D 41/02, F01N 9/00

(54) **Verfahren zum Betreiben einer Brennkraftmaschine und Vorrichtung zur Durchführung des Verfahrens**

(30) Priorität: 21.10.2008 DE 102008043025
(71) Anmelder: Robert Bosch GmbH, 70442 Stuttgart (DE)
(72) Erfinder: Rapp, Bernd, 71282, Hemmingen (DE); Beiter, Andreas, 72414, Rangendingen (DE); Joos, Sascha, 70199, Stuttgart (DE)

(57) **Zusammenfassung**

Es werden ein Verfahren zum Betreiben einer Brennkraftmaschine (10), die wenigstens eine wenigstens einem Zylinder (11) zugeordnete Glühstiftkerze (12) enthält, und in deren Abgasbereich (13) wenigstens ein Katalysator (14) angeordnet ist, sowie eine Vorrichtung zur Durchführung des Verfahrens vorgeschlagen. Die Glühstiftkerze (12) wird unabhängig vom Brennkraftmaschinen-Betriebszustand zumindest zeitweise bis zum Erreichen eines vorgegebenen Maßes für die Konvertierungsfähigkeit des Katalysators (14) betrieben. Die erfindungsgemäße Vorgehensweise ermöglicht einen emissionsarmen Betrieb der Brennkraftmaschine (10) bei gleichzeitig minimalem Energieverbrauch und verlängerter Lebensdauer der Glühstiftkerze (12).

## Beschreibung

Die Erfindung geht aus von einem Verfahren zum Betreiben einer Brennkraftmaschine sowie von einer Vorrichtung zur Durchführung des Verfahrens nach der Gattung der unabhängigen Ansprüche.

Gegenstand der vorliegenden Erfindung sind auch ein Steuergerätprogramm sowie ein Steuergerät-Programmprodukt.

### Stand der Technik

In der DE 10 2005 061 878 A1 ist eine Glühstrom-Steuereinrichtung zur Steuerung des Glühstroms einer in einem Zylinder einer Brennkraftmaschine angeordneten Glühstiftkerze beschrieben. Die vorbekannte Glühstrom- Steuereinrichtung umfasst eine Umwelt-Erfassungseinrichtung sowie eine Fahrer- und/oder Fahrzeugerfassungseinrichtung, die eine momentane Umgebung des Fahrzeugs betreffende Umweltinformation sowie den Fahrer oder das Fahrzeug betreffende Inneninformationen erfassen und diese an eine Leistungsanforderungs-Vorherbestimmungseinrichtung ausgeben. Die Leistungsanforderungs-Vorherbestimmungseinrichtung bestimmt eine zu erwartende Leistungsanforderung an die Brennkraftmaschine, sodass bei einer abgekühlten Brennkraftmaschine eine vorausgehende Aufheizung der Glühstiftkerze möglich ist. Dadurch kann die Verbrennung in den Zylindern der Brennkraftmaschine verbessert und insbesondere der Ausstoß von unerwünschten Abgasen verringert werden.

Der Erfindung liegt die Aufgabe zugrunde, ein einfaches Verfahren zum Betreiben einer Brennkraftmaschine, die wenigstens eine wenigstens einem Zylinder zugeordnete Glühstiftkerze enthält, und in deren Abgasbereich wenigstens ein Katalysator angeordnet ist sowie eine Vorrichtung zur Durchführung des Verfahrens anzugeben.

### Offenbarung der Erfindung

Die Erfindung geht aus von einem Verfahren zum Betreiben einer Brennkraftmaschine, die wenigstens eine Glühstiftkerze enthält, die wenigstens einem Zylinder zugeordnet ist, und in deren Abgasbereich wenigstens ein Katalysator angeordnet ist. Die erfindungsgemäße Vorgehensweise zeichnet sich dadurch aus, dass die Glühstiftkerze unabhängig vom Brennkraftmaschinen-Betriebszustand zumindest zeitweise bis zum Erreichen eines vorgegebenen Maßes für die Konvertierungsfähigkeit des Katalysators betrieben wird.

Das Betreiben der wenigstens einen Glühstiftkerze zumindest zeitweise bis zum Erreichen des Maßes für die Konvertierungsfähigkeit des Katalysators beeinflusst insbesondere die Verbrennung des Kraftstoffs in den Zylindern der Brennkraftmaschine dahingehend positiv, dass möglichst wenig unerwünschte Abgaskomponenten wie Kohlenmonoxid und Kohlenwasserstoffen entstehen. Dadurch kann eine Optimierung des Brennkraftmaschinen-Betriebs mit dem Schwerpunkt auf geringe NOx-Emissionen vorgesehen werden.

Die stabilisierende Wirkung durch das Betreiben der Glühstiftkerze beruht auf einer Verminderung des Zündverzugs und auf einer Verbesserung der Verbrennungsrobustheit durch eine definierte Vorkonditionierung des Brennraums in den Zylindern der Brennkraftmaschine.

Die insbesondere geringen Kohlenmonoxid- und Kohlenwasserstoff-Emissionen werden über die gesamte Lebensdauer der Brennkraftmaschine und des Katalysators auf einem niedrigen Niveau gehalten.

Die erfindungsgemäße Vorgehensweise kommt insbesondere bei einem Kaltstart der Brennkraftmaschine zum Tragen. Weiterhin wird die erfindungsgemäße Vorgehensweise während des anschließenden Betriebs der Brennkraftmaschine vorzugsweise stets dann vorgesehen, wenn das vorgegebene Maß für die Konvertierungsfähigkeit des Katalysators, beispielsweise im Rahmen einer Schubabschaltung der Brennkraftmaschine, unterschritten wird.

Durch die erfindungsgemäße Vorgehensweise wird der besondere Vorteil eines effizienten Betriebs der wenigstens einen Glühstiftkerze dadurch erzielt, dass die Energieversorgung der Glühstiftkerze nach dem Erreichen des vorgegebenen Maßes für die Konvertierungsfähigkeit des Katalysators abgeschaltet werden kann, sodass die Glühstiftkerze nicht unnötig betrieben und der resultierende Kraftstoffverbrauch unnötig erhöht werden. Dadurch werden einerseits die Glühkerze 12 so wenig wie möglich belastet und andererseits der Energieverbrauch minimiert.

Die Festlegung des Maßes für die Konvertierungsfähigkeit des Katalysators beziehungsweise die Feststellung des Erreichens des Maßes für die Konvertierungsfähigkeit kann auf unterschiedliche Weisen erfolgen, wobei einzelne Ausführungsbeispiele Gegenstände von abhängigen Ansprüchen sind, die darüber hinaus weitere vorteilhafte Ausgestaltungen und Weiterbildungen der erfindungsgemäßen Vorgehensweise betreffen.

Eine einfache Ausgestaltung sieht vor, dass das vorgegebene Maß für die Konvertierungsfähigkeit des Katalysators erreicht sein soll, wenn der Katalysator seine Anspringtemperatur erreicht hat. Die Anspringtemperatur, die auch als "Light-off"-Temperatur bezeichnet wird, ist diejenige Temperatur, ab welcher die katalytisch unterstützten Reaktionen im Katalysator stattfinden können, um eine Konvertierungsrate von oberhalb 50% zu erreichen.

Eine besonders einfache Ausgestaltung sieht vor, dass das vorgegebene Maß für die Konvertierungsfähigkeit des Katalysators dann erreicht sein soll, wenn eine vorgegebene Betriebsdauer der Glühstiftkerze abgelaufen ist.

Eine andere einfache Ausgestaltung sieht vor, dass das vorgegebene Maß für die Konvertierungsfähigkeit des Katalysators erreicht sein soll, wenn der Katalysator einen bestimmten Konvertierungsgrad erreicht hat. Der Konvertierungsgrad kann beispielsweise mittels eines stromabwärts nach dem Katalysator angeordneten Abgassensors bestimmt werden, der eine oder mehrere vom Katalysator zu konvertierende Abgaskomponenten detektiert, wobei die Strom aufwärts auftretenden entsprechenden Abgaskomponenten entweder berechnet oder ebenfalls gemessen werden können.

Eine Ausgestaltung sieht vor, das das Erreichen des vorgegebenen Maßes für die Konvertierungsfähigkeit des Katalysators anhand eines Vergleichs der stromaufwärts des Katalysators gemessenen oder berechneten Stromaufwärts-Abgastemperatur mit einem Stromaufwärts-Abgastemperatur-Schwellenwert festgestellt wird.

Eine alternative oder zusätzliche Ausgestaltung sieht vor, dass das Erreichen des vorgegebenen Maßes für die Konvertierungsfähigkeit des Katalysators anhand eines Vergleichs der stromabwärts des Katalysators gemessenen Stromabwärts-Abgastemperatur mit einem Stromabwärts-Abgastemperatur-Schwellenwert festgestellt wird.

Eine vorteilhafte Ausgestaltung sieht vor, das das Erreichen des vorgegebenen Maßes für die Konvertierungsfähigkeit des Katalysators anhand eines Vergleichs der am Katalysator auftretenden Differenz zwischen der Stromabwärts-Abgastemperatur und der Stromaufwärts-Abgastemperatur und Vergleich mit einem Temperaturdifferenz-Schwellenwert festgestellt wird, wobei die Stromabwärts-Abgastemperatur gemessen und die Stromaufwärts-Abgastemperatur gemessen oder berechnet werden kann.

Mit diesen Maßnahmen kann insbesondere ein Alterungsprozess des Katalysators berücksichtigt werden, während dem sich die Konvertierungsfähigkeit des Katalysators normalerweise verschlechtert.

Alternativ oder zusätzlich kann das Erreichen des vorgegebenen Maßes für die Konvertierungsfähigkeit des Katalysators durch eine Messung des Abgaslambdas stromabwärts nach dem Katalysator und einem Vergleich mit einem Stromabwärts-Abgaslambda-Schwellenwert festgestellt werden.

Alternativ oder zusätzlich kann das Erreichen des vorgegebenen Maßes für die Konvertierungsfähigkeit des Katalysators anhand eines auftretenden Unterschieds zwischen dem Stromabwärts-Abgaslambda und dem Stromaufwärts-Abgaslambda und einem Vergleich der Abweichung mit einem Abgaslambdaabweichungs-Schwellenwert festgestellt werden. Hierbei wird das Abgaslambda stromabwärts gemessen und das Abgaslambda stromaufwärts vor dem Katalysator gemessen oder berechnet.

Die zuvor beschriebenen Ausgestaltungen, bei denen mindestens eine Abgastemperatur und/oder mindestens ein Abgaslambda bewertet werden, eignen sich nicht nur zur Feststellung des Erreichens des vorgegebenen Maßes für die Konvertierungsfähigkeit des Katalysators, sondern sind gleichermaßen zur Feststellung geeignet, ob der Katalysator seine Anspringtemperatur erreicht hat.

Gemäß einer Weiterbildung ist vorgesehen, dass die der Glühkerze zugeführte elektrische Leistung variiert wird. Beispielsweise kann zu Beginn des Heizvorgangs eine erhöhte Leistung vorgegeben werden, die mit zunehmender Betriebsdauer der Glühstiftkerze abgesenkt wird.

Die erfindungsgemäße Vorrichtung zur Durchführung des Verfahrens betrifft zunächst ein speziell hergerichtetes Steuergerät, das Mittel zur Durchführung des Verfahrens enthält. Als Mittel sind eine Konvertierungsfähigkeits-Ermittlung sowie eine Glühstiftkerzen-Heizungssteuerung vorgesehen.

Das Steuergerät enthält vorzugsweise wenigstens einen elektrischen Speicher, in welchem die Verfahrensschritte als Steuergerätprogramm abgelegt sind.

Das erfindungsgemäße Steuergerät-Programm sieht vor, dass alle Schritte des erfindungsgemäßen Verfahrens ausgeführt werden, wenn es in einem Steuergerät abläuft.

Das erfindungsgemäße Steuergerät-Programmprodukt mit einem auf einem maschinenlesbaren Träger gespeicherten Programmcode führt das erfindungsgemäße Verfahren aus, wenn das Programm in einem Steuergerät abläuft.

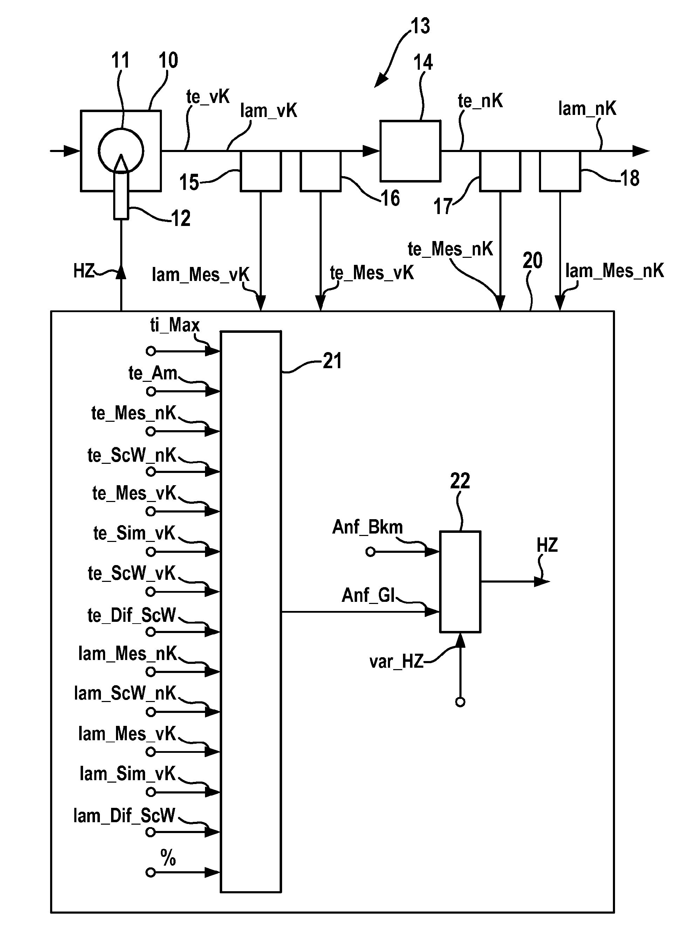

Ausführungsbeispiele der Erfindung sind in der Zeichnung dargestellt und in der nachfolgenden Beschreibung näher erläutert.

Kurzbeschreibung der Figur

Die Figur zeigt ein technisches Umfeld, in welchem ein erfindungsgemäßes Verfahren abläuft.

### Detaillierte Beschreibung der Ausführungsbeispiele

Die Figur zeigt eine Brennkraftmaschine 10, die wenigstens einen Zylinder 11 enthält, Glühstiftkerze 12 zugeordnet ist. Im Abgasbereich 13 der Brennkraftmaschine 10 ist zumindest ein Katalysator 14 angeordnet.

Im Abgasbereich 13 stromaufwärts vor dem Katalysator 14 treten eine Stromaufwärts-Abgastemperatur te_vK sowie ein Stromaufwärts-Abgaslambda lam_vK auf. Stromabwärts nach dem Katalysator 14 treten eine Stromabwärts-Abgastemperatur te_nK sowie ein Stromabwärts-Abgaslambda lam_nK auf.

Das Stromaufwärts-Abgaslambda lam_vK werden von einem Stromaufwärts-Lambdasensor 15 und die Stromaufwärts-Abgastemperatur te_vK von einem Stromaufwärts-Temperatursensor 16 gemessen. Die Stromabwärts-Abgastemperatur te_nK werden von einem Stromabwärts-Temperatursensor 17 und das Stromabwärts-Abgaslambda lam_nK von einem Stromabwärts-Lambdasensor 18 gemessen.

Ein Steuergerät 20 stellt Glühstiftkerze 12 eine Heizleistung HZ zur Verfügung. Der Stromaufwärts-Lambdasensor 15 gibt an das Steuergerät 20 ein gemessenes Stromaufwärts-Abgaslambda lam_Mes_vK, der Stromaufwärts-Temperatursensor 16 eine gemessene Stromaufwärts-Abgastemperatur te_Mes_vK, der Stromabwärts-Temperatursensor 17 eine gemessene Stromabwärts-Abgastemperatur te_Mes_nK und der Stromabwärts-Lambdasensor 18 ein gemessenes Stromabwärts-Abgaslambda lam_Mes_nK ab.

Das Steuergerät 20 enthält eine Konvertierungsgrad-Ermittlung 21 sowie eine Glühstiftkerzen-Heizungssteuerung 22.

Der Konvertierungsgrad-Ermittlung 21 werden eine maximale Zeitdauer ti_Max, eine Anspringtemperatur te_An, die gemessene Stromabwärts-Abgastemperatur te_Mes_nK, ein Stromabwärts-Abgastemperatur-Schwellenwert te_ScW_nK, die gemessene Stromaufwärts-Abgastemperatur te_Mes_vK, eine berechnete Stromaufwärts-Abgastemperatur te_Sim_vK, ein Stromaufwärts-Abgastemperatur-Schwellenwert te_ScW_vK, ein Temperaturdifferenz-Schwellenwert te_Dif_ScW, das gemessene Stromabwärts-Abgaslambda lam_Mes_nK, ein Stromabwärts-Abgaslambda-Schwellenwert lam_ScW_nK, das gemessene Stromaufwärts-Abgaslambda lam_Mes_vK, ein berechnetes Stromaufwärts-Abgaslambda lam_Sim_vK, ein Abgaslambdaabweichungs-Schwellenwert lam_Dif_ScW sowie ein prozentualer Konvertierungsgrad % zur Verfügung gestellt. Die Konvertierungsgrad-Ermittlung 21 stellt ein Glüh-Anforderungssignal Anf_Gl bereit, das der Glühstiftkerzen-Heizungssteuerung 22 zur Verfügung gestellt wird, der weiterhin ein Brennkraftmaschinen-Anforderungssignal Anf_Bkm sowie eine Heizleistungsvorgabe var_HZ zur Verfügung gestellt werden und welche die Heizleistung HZ für die Glühstiftkerze 12 bereitstellt.

### Das erfindungsgemäße Verfahren arbeitet folgendermaßen:

Der im Abgasbereich 13 der Brennkraftmaschine 10 angeordnete Katalysator 14 ist zur Konvertierung von unerwünschten Abgaskomponenten der Brennkraftmaschine 10 wie beispielsweise Kohlenmonoxid, Kohlenwasserstoffe und Stickoxiden vorgesehen.

Erfindungsgemäß ist das Betreiben der Glühstiftkerze 12, wobei zumindest eine Glühstiftkerze 12 zumindest einem Zylinder 11 der Brennkraftmaschine 10 zugeordnet ist, zumindest zeitweise bis zum Erreichen eines vorgegebenen Maßes für die Konvertierungsfähigkeit des Katalysators 14 vorgesehen. Eine nicht ausreichende Konvertierungsfähigkeit tritt insbesondere bei einem Kaltstart der Brennkraftmaschine 10 auf. Jedoch auch im nachfolgenden Betrieb der Brennkraftmaschine 10 kann das die Konvertierungsfähigkeit unter das vorgegebene Maß absinken, beispielsweise während einer Schubabschaltung.

Die Glühstiftkerze 12 ist normalerweise zum Beheizen des einer DieselBrennkraftmaschine 10 zugeführten Luft-Kraftstoff-Gemischs vorgesehen. Die Glühstiftkerze 12 wird daher üblicherweise in Abhängigkeit vom Betriebszustand der Brennkraftmaschine 10, beispielsweise in Abhängigkeit von einem Kaltstartvorgang betrieben. Zu diesem Zweck wird der Glühkerzen-Heizungssteuerung 22 das Brennkraftmaschinen-Anforderungssignal Anf_Bkm zur Verfügung gestellt, welches die Glühkerzen-Heizungssteuerung 22 dazu veranlasst, die Heizleistung HZ bereitzustellen. Das Brennkraftmaschinen-Anforderungssignal Anf_Bkm kann beispielsweise von der Betriebstemperatur der Brennkraftmaschine 10 abhängen.

In der Praxis wird die Glühstiftkerze 12 mit einer nicht näher gezeigten, gegebenenfalls getakteten Spannungsquelle verbunden, wobei der Strom von der Glühstiftkerzentemperatur abhängt.

Die Ansteuerung der Glühstiftkerze 12 unabhängig vom Brennkraftmaschinen-Betriebszustand zumindest zeitweise bis zum Erreichen des vorgegebenen Maßes für die Konvertierungsfähigkeit des Katalysators 14 erfolgt in Abhängigkeit vom Glüh-Anforderungssignal Anf_Gl, welches die Konvertierungsgrad-Ermittlung 21 bereitstellt. Die Glühstiftkerze 12 kann dadurch zumindest zeitweise bis zum Erreichen des vorgegebenen Maßes für die Konvertierungsfähigkeit des Katalysators 14 unabhängig vom Brennkraftmaschinen-Anforderungssignal Anf_Bkm mit der Heizleistung HZ beaufschlagt werden.

Durch das Betreiben der Glühstiftkerze 12 werden die Abgas-Rohemissionen der Brennkraftmaschine 10, insbesondere die Kohlenmonoxidemission und die Kohlenwasserstoffemissionen positiv beeinflusst, sodass auch bei einer nicht ausreichenden Konvertierungsfähigkeit des Katalysators 14 minimale Emissionen auftreten. Durch das Beheizen der Glühstiftkerze 12 wird in den Zylinder 11 der Brennkraftmaschine 10 elektrische Leistung eingetragen, die zu einer Temperaturerhöhung im Zylinder 11 und somit im Abgasbereich 13 beiträgt, wodurch das Aufheizen des Katalysators 14 unterstützt werden kann. Hierbei kann ein Heizbedarf des Katalysators 14 ausgehend sowohl von einem Kaltstart der Brennkraftmaschine 10 als auch von einem Brennkraftmaschinen-Betriebszustand mit niedriger Stromaufwärts-Abgastemperatur te_vK bestehen, wie sie beispielsweise im Leerlauf oder im Rahmen einer Schubabschaltung der Brennkraftmaschine 10 auftritt.

Gemäß einer einfachen Ausgestaltung wird das vorgegebene Maß für die Konvertierungsfähigkeit des Katalysators 14 erreicht, wenn die vorgegebene maximale Zeitdauer ti_Max abgelaufen ist. Der Beginn der Zeitdauer kann beispielsweise durch eine nicht näher gezeigte Anforderung zum Beheizen des Katalysators 14 festgelegt sein. Weiterhin kann der Beginn der Zeitdauer in Abhängigkeit von den weiter unten beschriebenen Maßnahmen festgelegt sein.

Gemäß einer anderen sehr einfachen Ausgestaltung wird das Erreichen des vorgegebenen Maßes für die Konvertierungsfähigkeit des Katalysators 14 angenommen, wenn der Katalysator 14 ist eine Anspringtemperatur te_An erreicht hat. Das Erreichen der Anspringtemperatur te_An kann ebenfalls mit den weiter unten beschriebenen Maßnahmen festgestellt werden.

Gemäß einer alternativen einfachen Ausgestaltung kann vorgesehen, dass das vorgegebene Maß für die Konvertierungsfähigkeit des Katalysators 14 erreicht sein soll, wenn der Katalysator einen bestimmten Konvertierungsgrad % erreicht hat. Bei diesem Ausführungsbeispiel kann ein konkreter Prozentsatz, beispielsweise 80% vorgegeben werden, wobei das Erreichen des bestimmten Konvertierungsgrads % durch einen nicht näher gezeigten, stromabwärts nach dem Katalysator 14 angeordneten Abgassensor und Vergleich mit der stromaufwärts vor dem Katalysator gemessenen oder berechneten zu konvertierenden Abgaskomponente festgestellt werden kann.

Ein anderes Ausführungsbeispiel sieht vor, dass das Erreichen des vorgegebenen Maßes für die Konvertierungsfähigkeit des Katalysators 14 anhand eines Vergleichs der gemessenen Stromabwärts-Abgastemperatur te_Mes_nK mit dem Stromabwärts-Abgastemperatur-Schwellenwert te_ScW_nK festgestellt wird. Die Stromabwärts-Abgastemperatur te_nK kann näherungsweise als Maß für die Katalysatortemperatur herangezogen werden.

Alternativ oder zusätzlich kann vorgesehen sein, dass das Erreichen des vorgegebenen Maßes für die Konvertierungsfähigkeit des Katalysators 14 anhand eines Vergleichs der gemessenen Stromaufwärts-Abgastemperatur te_Mes_vK mit dem Stromaufwärts-Abgastemperatur-Schwellenwert te_ScW_vK festgestellt wird. In diesem Fall wird die Stromaufwärts-Abgastemperatur te_vK wenigstens näherungsweise als ein Maß für die Katalysatortemperatur angesehen.

Gemäß einer anderen Vorgehensweise, die zusätzlich oder alternativ vorgesehen sein kann, wird das Erreichen des vorgegebenen Maßes für die Konvertierungsfähigkeit des Katalysators 14 anhand eines Vergleichs der am Katalysator 14 auftretenden Differenz zwischen der Stromabwärts-Abgastemperatur te_nK und der Stromaufwärts-Abgastemperatur te_vK und Vergleich mit dem Temperaturdifferenz-Schwellenwert te_Dif_ScW festgestellt, wobei die Stromabwärts-Abgastemperatur te_nK gemessen und die Stromaufwärts-Abgastemperatur te_vK gemessen oder berechnet werden kann.

Die Stromaufwärts-Abgastemperatur te_vK kann der Konvertierungsfähigkeits-Ermittlung 21 sowohl als gemessene Stromaufwärts-Abgastemperatur te_Mes_vK als auch als berechnete Stromaufwärts-Abgastemperatur te_Sim_vK zur Verfügung gestellt werden. Die berechnete Stromaufwärts-Abgastemperatur te_Sim_vK kann in Abhängigkeit von Kenngrößen der Brennkraftmaschine 10 wie beispielsweise der Last beziehungsweise der der Brennkraftmaschine 10 zugemessenen Kraftstoffmenge berechnet werden.

Die auf den Erfassung wenigstens einer Abgastemperatur beruhenden Ausgestaltungen können nicht nur zur Ermittlung des vorgegebenen Maßes für die Konvertierungsfähigkeit des Katalysators 14, sondern auch zum Feststellen des Erreichens seiner Anspringtemperatur herangezogen werden.

Alternativ oder zusätzlich kann das vorgegebene Maß für die Konvertierungsfähigkeit des Katalysators 14 mit dem gemessenen Stromabwärts-Abgaslambda lam_nK und einem Vergleich mit dem Stromabwärts-Abgaslambda-Schwellenwert lam_ScW_nK festgestellt werden.

Besonders vorteilhaft wird zusätzlich oder alternativ das Erreichen des vorgegebenen Maßes für die Konvertierungsfähigkeit des Katalysators 14 durch einen Vergleich des Stromabwärts-Abgaslambdas lam_nK mit dem Stromaufwärts-Abgaslambda lam_vK festgestellt. Hierbei kann das Stromaufwärts-Abgaslambda lam_vK durch das gemessene Stromaufwärts-Abgaslambda lam_Mes_vK oder durch das berechnete Stromaufwärts-Abgaslambda lam_Sim_vK bereitgestellt werden. Das Erreichen des Maßes für die Konvertierungsfähigkeit wird anschließend durch Vergleich des gemessenen Stromabwärts-Abgaslambdas lam_Mes_nK mit dem gemessenen Stromaufwärts-Abgaslambda lam_Mes_vK oder dem berechneten Stromaufwärts-Abgaslambda lam_Sim_vK festgestellt. Der Unterschied wird mit dem Abgaslambdaabweichungs-Schwellenwert lam_Dif_ScW verglichen, wobei vorzugsweise die Beträge der Abweichungen der Abgaslambdas lam_vK, lam_nK dem Vergleich zugrunde gelegt werden. Hierbei wird davon ausgegangen, dass beim Erreichen des vorgegebenen Maßes für die Konvertierungsfähigkeit des Katalysators 14 der Abgaslambdaabweichungs-Schwellenwert lam_Dif_ScW überschritten wird. Da das Stromaufwärts-Abgaslambda lam_vK sowohl oberhalb als auch unterhalb des stöchiometrischen Abgaslambdas variieren kann, ist vorzugsweise die Betragsbildung der Abgaslambdaabweichung vorgesehen.

Gemäß einer Ausgestaltung kann eine Leistungssteuerung der Glühstiftkerze 12 mittels der Heizleistungsvorgabe var_HZ vorgesehen sein. Die Beeinflussung der Leistung erfolgt vorzugsweise derart, dass zu Beginn des Beheizens der Glühstiftkerze 12 die maximale Leistung vorgegeben wird, während mit zunehmender Betriebsdauer der Glühstiftkerze 12 die Leistung zurückgenommen wird. Die beschriebenen erfindungsgemäßen Vorgehensweisen ermöglichen ein gezieltes Abschalten der Beheizung der Glühstiftkerze 12 zu einem Zeitpunkt, zu welchem der Katalysator 14 in der Lage ist, eine ausreichende Konvertierung von unerwünschten Abgaskomponenten sicherzustellen, sodass dann eine Optimierung der Emissionen der Brennkraftmaschine 10 durch das Betreiben der Glühstiftkerze 12 im Rahmen der erfindungsgemäß vorgesehenen Maßnahmen in den Hintergrund treten kann. Dadurch werden einerseits die Glühkerze 12 so wenig wie möglich belastet und andererseits der Energieverbrauch minimiert.

## Patentansprüche

1. Verfahren zum Betreiben einer Brennkraftmaschine (10), die wenigstens eine wenigstens einem Zylinder (11) zugeordnete Glühstiftkerze (12) enthält, und in deren Abgasbereich (13) wenigstens ein Katalysator (14) angeordnet ist, **dadurch gekennzeichnet, dass** die Glühstiftkerze (12) unabhängig vom Brennkraftmaschinen-Betriebszustand zumindest zeitweise bis zum Erreichen eines vorgegebenen Maßes für die Konvertierungsfähigkeit des Katalysators (14) betrieben wird.

2. Verfahren nach Anspruch 1, **dadurch gekennzeichnet, dass** das vorgegebene Maß für die Konvertierungsfähigkeit des Katalysators (14) erreicht ist, wenn der Katalysator (14) seine Anspringtemperatur (te_An) erreicht hat.

3. Verfahren nach Anspruch 1, **dadurch gekennzeichnet, dass** das vorgegebene Maß für die Konvertierungsfähigkeit des Katalysators (14) erreicht ist, wenn eine vorgegebene Betriebsdauer (ti_Max) der Glühstiftkerze (12) abgelaufen ist.

4. Anspruch 1 **dadurch gekennzeichnet, dass** das vorgegebene Maß für die Konvertierungsfähigkeit des Katalysators (14) erreicht ist, wenn der Katalysator (14) einen bestimmten Konvertierungsgrad (%) erreicht hat.

5. Verfahren nach Anspruch 1, **dadurch gekennzeichnet, dass** das Erreichen des vorgegebenen Maßes für die Konvertierungsfähigkeit des Katalysators (14) anhand eines Vergleichs der stromaufwärts des Katalysators (14) gemessenen oder berechneten Stromaufwärts-Abgastemperatur (te_Mes_vK, te_Sim_vK) mit einem Stromaufwärts-Abgastemperatur-Schwellenwert (te_ScW_vK) festgestellt wird.

6. Verfahren nach Anspruch 1, **dadurch gekennzeichnet, dass** das Erreichen des vorgegebenen Maßes für die Konvertierungsfähigkeit des Katalysators (14) anhand eines Vergleichs der stromabwärts des Katalysators (14) gemessenen Stromabwärts-Abgastemperatur (te_Mes_nK) mit einem Stromabwärts-Abgastemperatur-Schwellenwert (te_ScW_nK) festgestellt wird.

7. Verfahren nach Anspruch 1, **dadurch gekennzeichnet, dass** das Erreichen des vorgegebenen Maßes für die Konvertierungsfähigkeit des Katalysators (14) anhand eines Vergleichs der am Katalysator (14) auftretenden Differenz zwischen der Stromabwärts-Abgastemperatur (te_nK) und der Stromaufwärts-Abgastemperatur (te_vK) und Vergleich mit einem Temperaturdifferenz-Schwellenwert (te_Dif_ScW) festgestellt wird, wobei die Stromabwärts-Abgastemperatur (te_nK) gemessen und die Stromaufwärts-Abgastemperatur (te_vK) gemessen oder berechnet werden.

8. Verfahren nach Anspruch 1, **dadurch gekennzeichnet, dass** das Erreichen des vorgegebenen Maßes für die Konvertierungsfähigkeit des Katalysators (14) anhand eines Vergleichs des stromabwärts nach dem Katalysator (14) gemessenen Stromabwärts-Abgaslambdas (lam_Mes_nK) und einem Vergleich mit einem Stromabwärts-Abgaslambda-Schwellenwert (lam_ScW_nK) festgestellt wird.

9. Verfahren nach Anspruch 1, **dadurch gekennzeichnet, dass** das Erreichen des vorgegebenen Maßes für die Konvertierungsfähigkeit des Katalysators (14) anhand eines auftretenden Unterschieds zwischen dem Stromabwärts-Abgaslambda (lam_nK) und dem Stromaufwärts-Abgaslambda (lam_vK) und einem Vergleich mit einem Abgaslambdaabweichungs-Schwellenwert (lam_Dif_ScW) festgestellt wird, wobei das Stromabwärts-Abgaslambda (lam_nK) gemessen und das Stromaufwärts-Abgaslambda (lam_vK) gemessen oder berechnet werden.

10. Verfahren nach Anspruch 1, **dadurch gekennzeichnet, dass** die Temperatur der Glühstiftkerze (12) variiert wird.

11. Vorrichtung zum Betreiben einer Brennkraftmaschine (10), die wenigstens eine wenigstens einem Zylinder (11) zugeordnete Glühstiftkerze (12) enthält, und in deren Abgasbereich (13) wenigstens ein Katalysator (14) angeordnet ist, **dadurch gekennzeichnet, dass** zumindest ein zur Durchführung des Verfahrens nach einem der vorhergehenden Ansprüche speziell hergerichtetes Steuergerät (20) vorgesehen ist, das Mittel (21, 22) zur Durchführung des Verfahrens enthält.

12. Steuergerät-Programm, das alle Schritte eines Verfahrens nach einem der Ansprüche 1 bis 10 ausführt, wenn das Programm in einem Steuergerät (20) abläuft.

13. Steuergerät-Programmprodukt mit einem auf einem maschinenlesbaren Träger gespeicherten Programmcode zur Durchführung des Verfahrens nach einem der Ansprüche 1 bis 10, wenn das Programm in einem Steuergerät (20) ausgeführt wird.
